# EUROPÄISCHE PATENTANMELDUNG

(11) **EP 4 023 622 A1**
(43) Veröffentlichungstag der Anmeldung: **06.07.2022**
(21) Anmeldenummer: 21217047.6
(22) Anmeldetag: 22.12.2021
(51) Int. Cl.: C04B 40/00, C04B 111/00

(54) **ZUSAMMENSETZUNG EINES ZUSATZES FÜR EINE SPACHTELMASSE**

(30) Priorität: 30.12.2020 AT 2872020
(71) Anmelder: Scevic, Jure, 8020 Graz (AT)
(72) Erfinder: Scevic, Jure, 8020 Graz (AT)
(74) Vertreter: Wirnsberger & Lerchbaum Patentanwälte OG

(57) **Zusammenfassung**

Die Erfindung betrifft eine Zusammensetzung eines Zusatzes für eine Spachtelmasse. Erfindungsgemäß enthält die Zusammensetzung 0,0 % bis 2,0 %, vorzugsweise 0,1 % bis 1,0 %, insbesondere 0,1 % bis 0,5 % Zucker;
0,0 % bis 2,0 %, vorzugsweise 0,1 % bis 1,0 %, insbesondere 0,1 % bis 0,5 % Salz; optional bis zu 0,5 %, vorzugsweise bis zu 0,15 % einer Lebensmittelfarbe; 2 % bis 15 %, vorzugsweise 4 % bis 12 %, insbesondere 5 % bis 9 % einer Carbonsäure, insbesondere Zitronensäure oder eines Derivates davon;
optional Hilfs- und/oder Zusatzstoffe;
Rest Wasser.

Darüber hinaus betrifft die Erfindung eine Verwendung einer derartigen Zusammensetzung.

## Beschreibung

Die Erfindung betrifft eine Zusammensetzung eines Zusatzes für eine Spachtelmasse.

Darüber hinaus betrifft die Erfindung eine Verwendung einer derartigen Zusammensetzung.

Bei Verspachtelungsarbeiten von Gipskartonwänden oder dergleichen werden Spachtelmassen eingesetzt, die aus einer festen Spachtelbasis gebildet werden, indem diese mit Wasser vermischt wird. Es ergibt sich dann eine fließfähige Spachtelmasse, mit welcher gespachtelt werden kann. Entsprechende Spachtelbasen sind im Handel frei verfügbar bzw. erhältlich; Wasser ist in der Regel auf jeder Baustelle zugänglich.

Beim Aufstellen von Trockenwänden aus Gipskarton oder dergleichen und beim Spachteln ergibt sich oft das Problem, dass die erstellte Spachtelmasse im erforderlichen Vorratsbehältnis, in der Regel ein Kübel, relativ rasch aushärtet und daher nur eine begrenzte Einsatzzeit aufweist. Dies bedeutet, dass die Spachtelmasse sehr rasch aufgebraucht werden muss, was nicht immer möglich ist. Dies führt dann zu einem relativ großen Abfall.

Darüber hinaus scheint auch die Effektivität herkömmlicher Spachtelmassen im fertigen Zustand, also angerührt mit Wasser, noch verbesserbar. Könnte die Effektivität gesteigert werden, also mit einer vorgegebenen Menge an Spachtelmasse mehr Fläche bearbeitet werden, wäre weniger oft eine Spachtelmasse anzurühren. Dies würde zu einem geringeren Arbeitszeitaufwand führen.

Die erste Aufgabe der Erfindung liegt darin, eine Zusammensetzung der eingangs genannten Art bereitzustellen, mit welcher eine Verarbeitungszeit einer Spachtelmasse verlängert werden kann.

Eine weitere Aufgabe der Erfindung kann darin gesehen werden, eine Verwendung einer derartigen Zusammensetzung anzugeben.

Die erste Aufgabe wird dadurch gelöst, dass der erfindungsgemäße Zusatz bzw. die erfindungsgemäße Zusammensetzung wie folgt zusammengesetzt (in Gew.-%) ist:
0,0 % bis 2,0 %, vorzugsweise 0,1 % bis 1,0 %, insbesondere 0,1 % bis 0,5 % Zucker;
0,0 % bis 2,0 %, vorzugsweise 0,1 % bis 1,0 %, insbesondere 0,1 % bis 0,5 % Salz; optional bis zu 0,5 %, vorzugsweise bis zu 0,15 % einer Lebensmittelfarbe;
2 % bis 15 %, vorzugsweise 4 % bis 12 %, insbesondere 5 % bis 9 % einer Carbonsäure, insbesondere Zitronensäure oder eines Derivates davon;
optional Hilfs- und/oder Zusatzstoffe;
Rest Wasser.

Diese Zusammensetzung kann Wasser unter Bildung einer Lösung beigemengt werden, wonach mit dieser Mischung (Zusammensetzung und Wasser) die Spachtelbasis angerührt wird. Durch diesen Zusatz bzw. die Zusammensetzung härtet die erstellte Spachtelmasse deutlich langsamer aus und kann bei durchschnittlichen Gebinden um bis zu 2,5 Stunden länger genutzt werden bzw. ist in diesem Zeitraum gegenüber dem Stand der Technik länger verarbeitbar. Durch diese Erhöhung in der Verarbeitungsdauer kommt es konsequenterweise dazu, dass weniger Abfall aus nicht verarbeiteter Spachtelmasse anfällt und letztlich auch weniger oft Spachtelmasse angerührt werden muss. Letzteres wird auch dadurch unterstützt, dass bei Verwendung des entwickelten Zusatzes auch mehr Fläche mit der gleichen Menge an Spachtelmasse ver- bzw. bearbeitbar ist.

Eine entsprechende Zusammensetzung wird mit Wasser gemischt. Der Zusatz wird vorzugsweise in einem Verhältnis von 1:10 bis 1:100, vorzugsweise 1:20 bis 1:80, beispielsweise 1:50 bis 1:70, mit Wasser gemischt, somit also relativ hoch verdünnt. Eine so erstellte Lösung kann anschließend zum Anrühren einer Spachtelbasis zur Erstellung einer Spachtelmasse genutzt werden.

Der Zusatz ist alleine, aber auch bereits vermengt mit Wasser lagerstabil.

Es wird davon ausgegangen, dass der relativ hohe Anteil an Carbonsäure für die verbesserten Eigenschaften, die mit einem Zusatz erreicht werden, ursächlich ist. Grundsätzlich kommen beliebige Carbonsäuren infrage, vorzugsweise gerade oder verzweigte Carbonsäuren mit ein bis zwölf Kohlenstoffatomen. Besonders bevorzugt sind relativ kurzkettige Säuren wie Zitronensäure. Zitronensäure kann beispielsweise über ein E 330-Konzentrat zur Verfügung gestellt werden. Der Zusatz ist dann auch in keiner Weise für den menschlichen Organismus schädlich. Grundsätzlich ist es aber auch denkbar, dass andere Säuren, beispielsweise Essigsäure, Äpfelsäure oder dergleichen eingesetzt werden.

Die weitere Aufgabe wird durch Verwendung der erfindungsgemäßen Zusammensetzung oder der Mischung der erfindungsgemäßen Zusammensetzung mit Wasser bei Verspachtelungsarbeiten, insbesondere bei der Verspachtelung von Trockenwänden, gelöst.

Nachstehend ist ein Ausführungsbeispiel dargelegt: Auf Basis einer Zusammensetzung enthaltend 0,2 % Zucker sowie 0,2 % Salz in Form von Natriumchlorid und 6,9 % Konzentrat von E 330, Rest Wasser wurde ein Zusatz erstellt, welcher gemäß der nachstehenden Tabelle 1 mit Wasser vermengt wurde. Wie ersichtlich, betrug das Mischungsverhältnis in allen Fällen 1:60 (Zusatz:Wasser). Die so erstellte Mischung wurde anschließend zum Anrühren einer Spachtelbasis zur Erstellung einer Spachtelmasse verwendet, wobei mit den in der Tabelle 1 angegebenen Mengen die ersichtliche durchschnittliche Fläche bearbeitet werden konnte. Insgesamt ergab sich eine deutlich höhere Flächenausbeute auf Basis der Norm Q2 für Rigipsverspachtelung. Die Effektivität, also die bedeckbare Fläche konnte erheblich gesteigert werden.

**Tabelle 1: Zusatz und Mischungsverhältnisse sowie bearbeitete Fläche**

| Zusatz | Wasser | Durchschnittliche Fläche |
|---|---|---|
| 250 ml | 15 I | 75 m² |
| 500 ml | 30 I | 150 m² |
| 1 l | 60 I | 300 m² |
| 5 l | 300 I | 1500 m² |
| 10 l | 600 I | 3000 m² |

## Patentansprüche

1. Zusammensetzung eines Zusatzes für eine Spachtelmasse enthaltend (in Gew.-%):
0,0 % bis 2,0 %, vorzugsweise 0,1 % bis 1,0 %, insbesondere 0,1 % bis 0,5 % Zucker;
0,0 % bis 2,0 %, vorzugsweise 0,1 % bis 1,0 %, insbesondere 0,1 % bis 0,5 % Salz; optional bis zu 0,5 %, vorzugsweise bis zu 0,15 % einer Lebensmittelfarbe;
2 % bis 15 %, vorzugsweise 4 % bis 12 %, insbesondere 5 % bis 9 % einer Carbonsäure, insbesondere Zitronensäure oder eines Derivates davon;
optional Hilfs- und/oder Zusatzstoffe;
Rest Wasser.

2. Mischung einer Zusammensetzung nach Anspruch 1 mit Wasser im Verhältnis 1:10 bis 1:100.

3. Verwendung einer Zusammensetzung nach Anspruch 1 oder einer Mischung nach Anspruch 2 bei Verspachtelungsarbeiten, insbesondere bei der Verspachtelung von Trockenwänden.
